# EUROPÄISCHE PATENTANMELDUNG

(11) **EP 0 898 100 A2**
(43) Veröffentlichungstag der Anmeldung: **24.02.1999**
(21) Anmeldenummer: 98115039.4
(22) Anmeldetag: 11.08.1998
(51) Int. Cl.: F16K 11/085

(54) **Mehrwege-Mischventil**

(30) Priorität: 15.08.1997 DE 19736262
(71) Anmelder: Brückner, Tobias, 45892 Gelsenkirchen (DE)
(72) Erfinder: Brückner, Tobias, 45892 Gelsenkirchen (DE)
(74) Vertreter: Rohmann, Michael, Dr.

(57) **Zusammenfassung**

Mehrwege-Mischventil für fluide Medien, mit Ventilgehäuse (1) und in dem Ventilgehäuse bewegbarem Ventilkörper (6). Das Ventilgehäuse weist eine Zylinderbohrung (2) sowie eine Mehrzahl von Fluidkanälen (3) auf, wobei in Längsrichtung der Zylinderbohrung an der Zylinderbohrungswandung eine Mehrzahl von Verbindungsöffnungen (5) zu den Fluidkanälen vorgesehen sind. In der Zylinderbohrung ist ein um seine Längsachse drehbares Zylinderrohr (6) als Ventilkörper angeordnet. Das Zylinderrohr weist an zumindest einer Stirnseite eine Durchtrittsoffnung (7) für das fluide Medium auf. In dem Zylinderrohrmantel des Zylinderrohres ist eine Mehrzahl von Ventilöffnungen (10) mit der Maßgabe angeordnet, daß durch Drehung des Zylinderrohres jeweils zumindest eine Ventilöffnung (10) in Durchtrittsverbindung mit einer Verbindungsöffnung (5) überführbar ist.

## Beschreibung

Die Erfindung betrifft ein Mehrwege-Mischventil für fluide Medien, insbesondere für Flüssigkeitsströme, mit Ventilgehäuse und in dem Ventilgehäuse bewegbarem Ventilkörper. - Der Begriff Mehrwege-Mischventil meint ein Ventil, mit dem einerseits zumindest zwei von zumindest drei Wegen bzw. Anschlußleitungen miteinander in Verbindung gebracht werden können und mit dem andererseits Fluidströme aus zumindest zwei Wegen bzw. Anschlußleitungen miteinander vermischt werden können Das erfindungsgemäße Mehrwege-Mischventil ist insbesondere für Flüssigkeitsströme und bevorzugt für Flüssigkeitsströme bzw. Wasserströme unterschiedlicher Temperatur geeignet.

Aus der Praxis sind eine Mehrzahl von Mehrwege-Mischventilen, insbesondere 3-Wegemischventile oder 4-Wegemischventile, bekannt. Diese Mehrwege-Mischventile werden in der Regel mit Hilfe eines Stellmotors betätigt. Die Ventile werden bevorzugt auch in Heizanlagen eingesetzt, um verschiedene Flüssigkeitsströme bzw. Wasserströme unterschiedlicher Temperatur miteinander zu vermischen, um eine bestimmte Flüssigkeitstemperatur der Mischung einzustellen. Die aus der Praxis bekannten Mehrwege-Mischventile zeichnen sich in der Regel durch eine aufwendige Bauweise aus. Sie bestehen normalerweise aus einer Mehrzahl von Bauteilen aus unterschiedlichem Material. Sowohl die Herstellung als auch die Montage dieser bekannten Mehrwege-Mischventile ist aufwendig. Dieser Aufwand ist bei den bekannten Mehrwege-Mischventilen aber erforderlich, wenn eine funktionssichere Ventilfunktion und/oder eine effektive Mischfunktion gewährleistet sein soll. Aufgrund der aufwendigen Ausführung der bekannten Ventile ist in der Regel auch eine aufwendige Wartung oder Reinigung der Ventile erforderlich. Zur Reinigung muß ein solches bekanntes Mehrwege-Mischventil beispielsweise in eine Mehrzahl von Ventilbauelementen zerlegt werden.

Demgegenüber liegt der Erfindung das technische Problem zugrunde, ein Mehrwege-Mischventil der eingangs genannten Art anzugeben, das sich durch eine einfache und wenig aufwendige Bauweise auszeichnet und nichtsdestoweniger eine funktionssichere Ventilfunktion und eine effektive Mischfunktion gewährleistet.

Zur Lösung dieses technischen Problems lehrt die Erfindung ein Mehrwege-Mischventil für fluide Medien, insbesondere für Flüssigkeitsströme, mit Ventilgehäuse und in dem Ventilgehäuse bewegbarem Ventilkörper,
wobei das Ventilgehäuse eine Zylinderbohrung sowie eine Mehrzahl von Fluidkanälen aufweist, wobei in Längsrichtung der Zylinderbohrung an der Zylinderbohrungswandung eine Mehrzahl von Verbindungsöffnungen zu den Fluidkanälen vorgesehen sind,
wobei in der Zylinderbohrung ein um seine Längsachse drehbares Zylinderrohr als Ventilkörper angeordnet ist, welches Zylinderrohr an zumindest einer Stirnseite eine Durchtrittsöffnung für das fluide Medium aufweist
und wobei in dem Zylinderrohrmantel des Zylinderrohres eine Mehrzahl von Ventilöffnungen mit der Maßgabe angeordnet ist, daß durch Drehung des Zylinderrohres jeweils zumindest eine Ventilöffnung in Durchtrittsverbindung mit einer Verbindungsöffnung überführbar ist.

Grundsätzlich können im Rahmen der Erfindung verschiedene Materialien für das Ventilgehäuse einerseits und für das Zylinderrohr andererseits eingesetzt werden. Vorzugsweise besteht das Ventilgehäuse und/oder das Zylinderrohr aus einem Edelstahl, beispielsweise auf Chrom-Nickel-Basis. Dieses Material zeichnet sich durch hohe Korrosionsbeständigkeit aus. Es liegt jedoch auch im Rahmen der Erfindung, daß das Ventilgehäuse und/oder das Zylinderrohr aus einem Kunststoff besteht. Zweckmäßigerweise wird hierzu ein temperaturbeständiger Kunststoff mit schlechter Wärmeleitung eingesetzt. Nach einer Ausführungsform der Erfindung besteht das Zylinderrohr aus Edelstahl und besteht das Ventilgehäuse aus einem Kunststoff, beispielsweise aus Polypropylen oder aus Polytetrafluorethylen.

Fluide Medien meint insbesondere Flüssigkeiten, vorzugsweise Wasser. - Die in einer oder in beiden Stirnseiten des Zylinderrohres ausgebildete Durchtrittsöffnung ist nach einer Ausführungsform der Erfindung als Austrittsöffnung für das fluide Medium oder für die fluiden Medien ausgeführt. In den verschiedenen Fluidkanälen wird Flüssigkeit, beispielsweise Heizwasser, bevorzugt mit jeweils unterschiedlichen Temperaturen zugeführt. Durch entsprechende Drehung des Zylinderrohres kann beispielsweise eine Ventilöffnung des Zylinderrohres auf eine Verbindungsöffnung eines Fluidkanales gedreht werden, so daß Flüssigkeit lediglich aus diesem Fluidkanal in das innere des Zylinderrohres gelangt und aus der Durchtrittsöffnung des Zylinderrohres austreten kann. Fernerhin besteht vorzugsweise die Möglichkeit, durch entsprechende Drehung des Zylinderrohres und aufgrund einer entsprechenden Anordnung der Ventilöffnungen in dem Zylinderrohrmantel zumindest zwei Ventilöffnungen auf zumindest zwei Verbindungsöffnungen zu drehen, so daß eine Durchtrittsverbindung zu zumindest zwei Fluidkanälen geschaffen wird. Auf diese Weise gelangt Flüssigkeit aus den zumindest zwei Fluidkanälen in das Innere des Zylinderrohres und kann sich dort vermischen sowie aus der Durchtrittsoffnung des Zylinderrohres austreten. Auf diese Weise können beispielsweise Flüssigkeitsströme verschiedener Temperatur gemischt werden, um eine gewünschte Temperatur in der Flüssigkeitsmischung einzustellen. Es besteht selbstverständlich auch die Möglichkeit, unterschiedliche Flüssigkeiten durch die Fluidkanäle zuzuführen und im Zylinderrohr zu mischen. Vorzugsweise kann die Drehung des Zylinderrohres so gesteuert und/oder geregelt werden, daß nur ein Teil des Querschnittes einer Ventilöffnung auf eine Verbindungsöffnung gedreht werden kann, so daß lediglich ein Teilquerschnitt der Ventilöffnung für den Durchtritt des fluiden Mediums aus einem Fluidkanal zur Verfügung steht. Insoweit kann die Menge des zugeführten fluiden Mediums aus dem betreffenden Fluidkanal eingestellt werden. - Nach einer anderen Ausführungsform der Erfindung ist die in einer oder in beiden Stirnseiten des Zylinderrohres ausgebildete Durchtrittsöffnung als Eintrittsöffnung für das fluide Medium ausgeführt. Dann kann das fluide Medium durch entsprechende Drehung des Zylinderrohres einem oder mehreren ausgewählten Fluidkanälen zugeführt werden. Das Zylinderrohr funktioniert bei dieser Ausführungsform gleichsam als Verteilerrohr.

Nach bevorzugter Ausführungsform der Erfindung sind die Fluidkanäle senkrecht zu der Zylinderbohrung in dem Ventilgehäuse angeordnet. Es liegt jedoch auch im Rahmen der Erfindung, daß die Fluidkanäle beispielsweise diagonal zu der Zylinderbohrung angeordnet sind. Vorzugsweise greift die Zylinderbohrung, die Verbindungsöffnungen bildend, in die Fluidkanäle ein. Mit anderen Worten liegt bevorzugt gleichsam eine Überschneidung der Zylinderbohrung und der Fluidkanäle vor und ist im Bereich einer Verbindungsöffnung ein Zylinderraumsegment jeweils zugleich Raumsegment des betreffenden Fluidkanals.

Nach bevorzugter Ausführungsform der Erfindung entsprechen die Abstände der Verbindungsöffnungen in Längsrichtung der Zylinderbohrung den Abständen der Ventilöffnungen bezüglich der Längsrichtung des Zylinderrohres. Die Anzahl der Ventilöffnungen im Zylinderrohr kann dabei der Anzahl der Verbindungsöffnungen in der Zylinderbohrungswandung entsprechen. Es liegt jedoch auch im Rahmen der Erfindung, daß die Anzahl der Ventilöffnungen im Zylinderrohr großer oder auch kleiner ist als die Anzahl der Verbindungsöffnungen in der Zylinderbohrungswandung bzw. im Ventilgehäuse. Bei der Ausführungsform, bei der die Anzahl der Ventilöffnungen größer ist als die Anzahl der Verbindungsoffnungen, sind bevorzugt zwei oder mehrere Ventilöffnungen in dem Zylinderrohr einer Verbindungsöffnung in der Zylinderbohrungswandung zugeordnet, so daß durch Verdrehen des Zylinderrohres jeweils eine dieser Ventilöffnungen mit der Verbindungsöffnung eine Durchtrittsverbindung bildet. Diese Ausführung ist insbesondere dann zweckmäßig, wenn es beispielsweise eine Drehstellung des Zylinderrohres gibt, in der lediglich zu einem ersten Fluidkanal über diese Verbindungsöffnung die Durchtrittsverbindung hergestellt wird und es zumindest eine weitere Drehstellung des Zylinderrohres gibt, in der einerseits die Durchtrittsverbindung zu dem ersten Fluidkanal mit einer zweiten Ventilöffnung hergestellt ist und andererseits eine weitere Durchtrittsverbindung an zumindest einer weiteren Verbindungsöffnung zu zumindest einem weiteren Fluidkanal hergestellt ist. Insoweit stehen nach bevorzugter Ausführungsform der Erfindung in zumindest einer Drehstellung des Zylinderrohres zumindest zwei Ventilöffnungen in Durchtrittsverbindung mit zumindest zwei Verbindungsöffnungen. Vorzugsweise gibt es also Drehstellungen des Zylinderrohres, in denen jeweils nur eine Durchtrittsverbindung hergestellt wird und gibt es fernerhin Drehstellungen des Zylinderrohres, in denen zwei oder mehr Durchtrittsverbindungen hergestellt sind. Durch Variation der Bohrungsdurchmesser der Ventilöffnungen im Zylinderrohr und/oder der Verbindungsöffnungen in der Zylinderbohrungswandung kann der Grad der Überschneidung der zugeordneten Öffnungen in bestimmten Drehstellungen des Zylinderrohres und somit das Misch- und Verteilverhalten des Mehrwege-Mischventils in weiten Grenzen beeinflußt werden.

Nach einer Ausführungsform der Erfindung ist in beiden Stirnseiten des Zylinderrohres eine Öffnung für das fluide Medium vorgesehen. Dann ist zweckmäßigerweise an dem Zylinderrohr ein Antriebsritzel befestigt, an welches Antriebsritzel bevorzugt ein Stellmotor angeschlossen ist.

Nach einer anderen Ausführungsform der Erfindung ist das Zylinderrohr an einer Stirnseite mit einer Zylinderstirnwand verschlossen. Bevorzugt weist das Zylinderrohr also nur an einer Stirnseite eine Durchtrittsöffnung für das fluide Medium auf. Nach bevorzugter Ausführungsform ist rohraußenseitig an der Zylinderstirnwand zumindest ein Anschlußelement für einen Drehantrieb des Zylinderrohres vorgesehen. Grundsätzlich liegt es im Rahmen der Erfindung, daß das Zylinderrohr manuell verdreht werden kann und diese manuelle Einstellung über das Anschlußelement verwirklicht wird. Nach bevorzugter Ausführungsform der Erfindung ist das Zylinderrohr mit einem Stellantrieb versehen. Zweckmäßigerweise ist hierzu das zumindest eine Anschlußelement an einen Stellmotor angeschlossen. Das Anschlußelement kann beispielsweise als Vierkantzapfen ausgebildet sein. Der Stellantrieb ist vorzugsweise an eine Steuer- und/oder Regeleinrichtung angeschlossen.

Nach bevorzugter Ausführungsform der Erfindung ist zwischen Zylinderrohr und Zylinderbohrungswandung zumindest ein Dichtungselement angeordnet, welches Dichtungselement zweckmäßigerweise als Dichtungsring ausgebildet ist. Vorzugsweise ist jeweils zwischen zwei Verbindungsöffnungen ein Dichtungselement bzw. Dichtungsring zwischen Zylinderrohr und Zylinderbohrungswandung angeordnet. Zweckmäßigerweise ist fernerhin an den Enden des Zylinderrohres im Bereich der Stirnseiten des Zylinderrohres jeweils zumindest ein Dichtungselement, vorzugsweise jeweils zumindest ein Dichtungsring, angeordnet.

Nach bevorzugter Ausführungsform, der im Rahmen der Erfindung besondere Bedeutung zukommt, ist ein erfindungsgemäßes Mehrwege-Mischventil als Ventilmodul ausgeführt und können mehrere dieser Module zu einem Ventilaggregat zusammengefügt werden. Zweckmäßigerweise werden dabei zumindest einige Fluidkanäle der zumindest zwei Ventilmodule aneinander angeschlossen. Hierzu weist das Ventilgehäuse bevorzugt zumindest eine Ventilgehäuseanschlußfläche auf und sind vorzugsweise in dieser Ventilgehäuseanschlußfläche Anschlußöffnungen der Fluidkanäle verwirklicht. Nach bevorzugter Ausführungsform sind zumindest zwei am Ventilgehäuse gegenüberliegende Ventilgehäuseanschlußflächen vorgesehen und weist jede dieser beiden Ventilgehäuseanschlußflächen Anschlußöffnungen der Fluidkanäle auf. Bevorzugt durchlaufen die Fluidkanäle das Ventilgehäuse. Wenn das Mehrwege-Mischventil als Ventilmodul im Rahmen eines Ventilaggregates eingesetzt wird, werden mehrere Ventilgehäuse zweckmäßigerweise mit ihrem Ventilgehäuseanschlußflächen aneinandergefügt. Dabei werden vorzugsweise zumindest zwei Anschlußöffnungen von Fluidkanälen eines ersten Ventilgehäuses an zumindest zwei Anschlußöffnungen von Fluidkanälen eines zweiten Ventilgehäuses angeschlossen. Nach bevorzugter Ausführungsform ist ein Ventilgehäuse quaderförmig ausgebildet. Vorzugsweise ist dabei zumindest eine Quaderseitenfläche als Ventilgehäuseanschlußfläche ausgeführt und weist die Ventilgehäuseanschlußfläche zumindest zwei Anschlußöffnungen der Fluidkanäle auf. Nach bevorzugter Ausführungsform sind zwei gegenüberliegende Quaderseitenflächen als Ventilgehäuseanschlußflächen ausgeführt und weist jede der gegenüberliegenden Ventilgehäuseanschlußflächen zumindest zwei Anschlußöffnungen der Fluidkanäle auf. Beim Zusammenfügen mehrerer Ventilgehäuse zu einem Ventilaggregat werden vorzugsweise das Ventilaggregat durch laufende Fluidkanäle gebildet und zweckmäßigerweise führen zumindest zwei dieser Fluidkanäle zu den Zylinderbohrungen aller Ventilgehäuse. - Gegenstand der Erfindung ist im übrigen auch ein Ventilaggregat aus einer Mehrzahl der erfindungsgemäßen Mehrwege-Mischventile.

Grundsätzlich bestehen im Rahmen der Erfindung verschiedene Möglichkeiten der Ausführung bzw. Ausgestaltung der Fluidkanäle. Zweckmäßigerweise weisen die Fluidkanäle einen kreisförmigen Querschnitt auf. Die Anzahl und die Position der Fluidkanäle in dem Ventilgehäuse ist grundsätzlich variabel. Vorzugsweise sind in dem Ventilgehäuse drei bis sieben, bevorzugt vier bis sechs Fluidkanäle vorgesehen. Die Fluidkanäle können beispielsweise nur an einer Seite der Zylinderbohrung vorgesehen sein oder aber auch an zwei gegenüberliegenden Seiten der Zylinderbohrung angeordnet sein.

Nach einer besonderen Ausführungsform der Erfindung ist das Zylinderrohr längsverschiebbar in der Zylinderbohrung des Ventilgehäuses angeordnet. Zweckmäßigerweise übertrifft dabei die Länge des Zylinderrohres die Länge der Zylinderbohrung. Mit dieser Ausführungsform wird insbesondere erreicht, daß Zylinderrohrabschnitte in die Zylinderbohrung eingeschoben oder eingezogen werden können, welche Zylinderrohrabschnitte zusätzliche Anordnungen von Ventilöffnungen aufweisen. Die Ausführungsform mit drehbaren und längsverschiebbaren Zylinderrohr zeichnet sich durch eine hervorragende Variabilität aus, da eine Mehrzahl von Kombinationsmöglichkeiten zur Herstellung von Durchtrittsöffnungen gegeben sind.

Zylinderrohr meint im Rahmen der Erfindung einen zylindrischen Hohlkörper, in dessen Hohlraum das fluide Medium aufgenommen werden kann. Vorzugsweise beträgt die Dicke des Zylinderrohrmantels ein Drittel bis ein Zwanzigstel des Zylinderrohraußendurchmessers. Nach bevorzugter Ausführungsform der Erfindung ist der Innenraum des Zylinderrohres vollständig hohl ausgeführt und lediglich zur Aufnahme des fluiden Mediums ausgelegt. Es liegt jedoch auch im Rahmen der Erfindung, daß in dem Zylinderrohr zumindest ein Innenzylinder angeordnet ist, der relativ zu dem Zylinderrohr verdrehbar und/oder relativ zu dem Zylinderrohr axial verschiebbar ist. Es versteht sich, daß entsprechende Anschluß- und Antriebseinrichtungen für die genannte Bewegung des Innenzylinders vorgesehen werden müssen. Der Innenzylinder kann axiale und/oder radiale Bohrungen aufweisen. Der Innenzylinder kann eine axiale Durchgangsbohrung aufweisen und somit als Innenzylinderrohr ausgebildet sein. Dadurch, daß eine solche axiale Durchgangsbohrung einen geringeren Durchmesser aufweist als der Innenraum des Zylinderrohres kann eine Drosselfunktion bezüglich des Fluidstromes eingerichtet werden. Mit Hilfe des Innenzylinders können zusätzliche Sperrfunktionen und Dosierfunktionen des Mehrwege-Mischventils verwirklicht werden. Beispielsweise können durch entsprechende Bohrungen im Innenzylinder bestimmte Fluidkanäle des Ventilgehäuses gezielt miteinander verbunden werden. Der Einsatz eines Innenzylinders eignet sich insbesondere für die Ausführungsform, bei der beide Stirnseiten des Zylinderrohres offen sind und von dem fluiden Medium durchströmt werden. Es liegt im übrigen auch im Rahmen der Erfindung, daß in dem Innenzylinder keine axiale Durchgangsbohrung eingerichtet ist, so daß das Zylinderrohr durch den Innenzylinder in zwei separate Zylinderrohrabschnitte unterteilt wird.

Es liegt fernerhin im Rahmen der Erfindung, daß zwischen dem Zylinderrohr und der Zylinderbohrung des Ventilgehäuses eine rohrförmige Zwischenhülse aus einem Dichtmaterial angeordnet ist. Diese Zwischenhülse kann beispielsweise aus einem Nitrilkautschuk mit bevorzugt hoher Shore-Härte bestehen.

Der Erfindung liegt die Erkenntnis zugrunde, daß sich das erfindungsgemäße Mehrwege-Mischventil durch eine einfache und wenig aufwendige Bauweise auszeichnet und nichtsdestoweniger überraschenderweise zugleich eine Vielzahl von Ventilfunktionen und Mischfunktionen möglich sind. Die Herstellung und Montage des erfindungsgemäßen Mehrwege-Mischventils zeichnet sich ebenfalls durch geringen Aufwand aus und nichtsdestoweniger genügt das Mehrwege-Mischventil im Hinblick auf seine Funktionssicherheit allen Anforderungen. Fernerhin ist eine einfache Wartung und Reinigung des Ventils möglich. Von besonderem Vorteil ist, daß mehrere erfindungsgemäße Mehrwege-Mischventile in einfacher Weise als Ventilmodule zu einem Ventilaggregat kombinierbar sind.

Im Ergebnis zeichnet sich die Erfindung gegenüber bekannten Mehrwege-Mischventilen durch beachtliche Vorteile aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Explosionsdarstellung des erfindungsgemäßen Mehrwege-Mischventils,
- Fig. 2: eine Seitenansicht des Gegenstandes nach Figur 1 in einer ersten Einstellung,
- Fig. 3: den Gegenstand nach Figur 2 in einer zweiten Einstellung,
- Fig. 4: eine perspektivische Ansicht eines Ventilaggregates aus einer Mehrzahl von erfindungsgemäßen Mehrwege-Mischventilen,
- Fig. 5: den Gegenstand nach Figur 4 in einer Heizanlage mit Schichtenspeicher und
- Fig. 6: eine andere Ausführungsform eines erfindungsgemäßen Mehrwege-Mischventils in einem Schichtenspeicher.

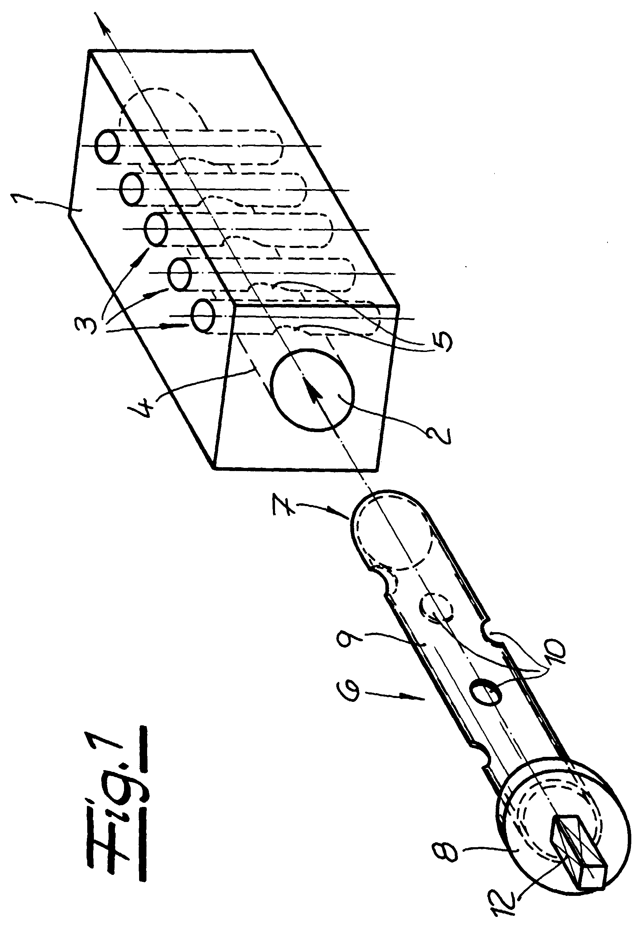

Die Figuren 1 bis 3 zeigen ein erfindungsgemäßes Mehrwege-Mischventil für fluide Medien, insbesondere für Flüssigkeitsströme, mit Ventilgehäuse 1 und in dem Ventilgehäuse 1 bewegbarem Ventilkörper. Das Ventilgehäuse 1 weist eine Zylinderbohrung 2 sowie im Ausführungsbeispiel fünf Fluidkanäle 3 auf. Vorzugsweise und im Ausführungsbeispiel sind die Fluidkanäle 3 senkrecht zu der Zylinderbohrung 2 in dem Ventilgehäuse 1 angeordnet. In Längsrichtung der Zylinderbohrung 2 sind an der Zylinderbohrungswandung 4 eine Mehrzahl von Verbindungsöffnungen 5 zu den Fluidkanälen 3 vorgesehen. Vorzugsweise und im Ausführungsbeispiel greift die Zylinderbohrung 2, die Verbindungsöffnungen 5 bildend, in die Fluidkanäle 3 ein.

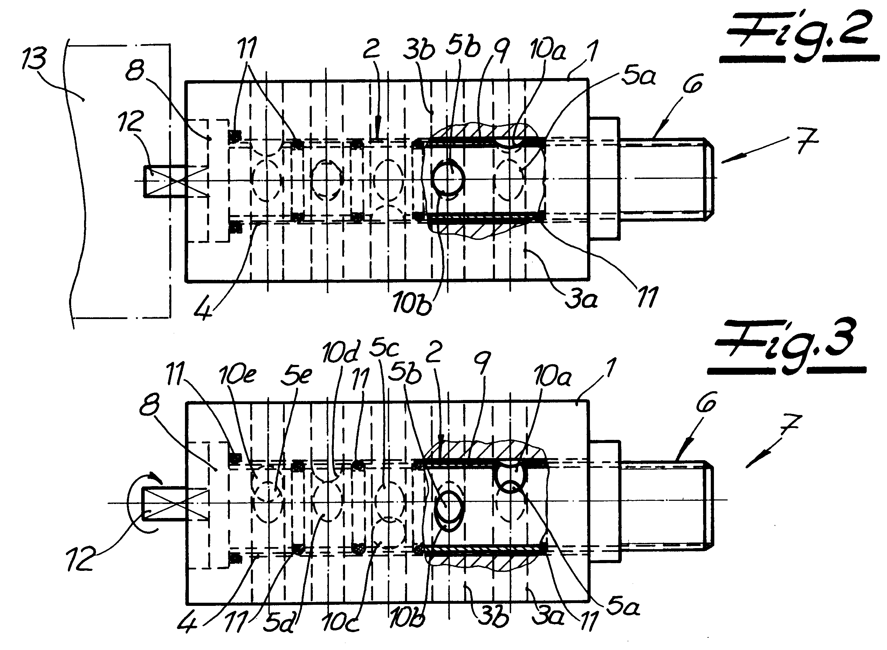

In der Zylinderbohrung 2 wird ein um seine Längsachse drehbares Zylinderrohr 6 als Ventilkörper angeordnet, welches Zylinderrohr im Ausführungsbeispiel an einer Stirnseite eine Durchtrittsöffnung 7 für das fluide Medium aufweist. An der anderen Stirnseite ist das Zylinderrohr 6 mit einer Zylinderstirnwand 8 verschlossen. In dem Zylinderrohrmantel 9 des Zylinderrohres 6 ist eine Mehrzahl von Ventilöffnungen 10 mit der Maßgabe angeordnet, daß durch Drehung des Zylinderrohres 6 jeweils zumindest eine Ventilöffnung 10 in Durchtrittsverbindung mit einer Verbindungsöffnung 5 überführbar ist. Vorzugsweise und im Ausführungsbeispiel entsprechen die Abstände der Verbindungsöffnungen 5 in Längsrichtung der Zylinderbohrung 2 den Abständen der Ventilöffnungen 10 bezüglich der Längsrichtung des Zylinderrohres 6. Dies ist insbesondere in den Figuren 2 und 3 erkennbar.

Vorzugsweise und im Ausführungsbeispiel besteht die Möglichkeit, durch Drehung des Zylinderrohres jeweils nur eine Ventilöffnung 10b in Durchtrittsverbindung mit einer Verbindungsöffnung 5b zu bringen. Diese Möglichkeit ist in Figur 2 dargestellt worden. Hier ist Flüssigkeit, beispielsweise Wasser einer bestimmten Temperatur, lediglich aus dem Fluidkanal 3b über die Verbindungsöffnung 5b und die Ventilöffnung 10b dem Inneren des Zylinderrohres 6 zuführbar und über die Durchtrittsöffnung 7 des Zylinderrohres 6, beispielsweise einem (in Figur 2 nicht dargestellten) Wärmeverbraucher, zuführbar. Fernerhin besteht vorzugsweise die Möglichkeit, durch Drehung des Zylinderrohres 6 mehrere Ventilöffnungen 10 in Durchtrittsverbindung mit mehreren Verbindungsöffnungen 5 zu bringen. In Figur 3 stehen zwei Ventilöffnungen 10a, 10b in Durchtrittsverbindung mit den zwei Verbindungsöffnungen 5a, 5b. Die übrigen Ventilöffnungen 10c, 10d und 10e sind von den Verbindungsöffnungen 5c, 5d und 5e im Ausführungsbeispiel nach Figur 3 getrennt. Das Ausführungsbeispiel nach Figur 3 verdeutlicht eine Mischfunktion des erfindungsgemäßen Mehrwege-Mischventils. Hier kann Flüssigkeit sowohl aus dem Fluidkanal 3a als auch aus dem Fluidkanal 3b in das Innere des Zylinderrohres 6 gelangen und dort findet eine Vermischung beider Flüssigkeitsströme statt. Wie aus Figur 3 ersichtlich ist, kann vorzugsweise durch entsprechende Drehung des Zylinderrohres 6 bei entsprechender Anordnung der Ventilöffnungen 10a, 10b an dem Zylinderrohr der effektive Querschnitt der Durchtrittsverbindung eingestellt werden. In der Stellung des Zylinderrohres 6 in Figur 3 wird durch die Ventilöffnung 10a lediglich etwa 30 % der Verbindungsöffnung 5a freigegeben, während durch die Stellung der Ventilöffnung 10b etwa 70 % der Verbindungsöffnung 5b freigegeben wird. Dadurch können vorzugsweise auch die Mengen der durch die Fluidkanäle 3a und 3b jeweils zugeführten Flüssigkeit eingestellt werden. Im Inneren des Zylinderrohres 6 werden die aus den Fluidkanälen 3a und 3b austretenden Flüssigkeiten vermischt und verlassen das Mehrwege-Mischventil über die Durchtrittsöffnung 7.

Zwischen Zylinderrohr 6 und Zylinderbohrungswandung 4 sind vorzugsweise Dichtungselemente, bevorzugt Dichtungsringe 11 angeordnet. Zweckmäßigerweise und im Ausführungsbeispiel nach den Figuren 2 und 3 ist jeweils ein Dichtungsring 11 zwischen zwei Verbindungsöffnungen 5 angeordnet. Vorzugsweise ist fernerhin ein Dichtungsring 11 an jedem Ende des Zylinderrohres 6 zwischen Zylinderrohr 6 und Zylinderbohrungswandung 4 vorgesehen.

Nach bevorzugter Ausführungsform ist rohraußenseitig an der Zylinderstirnwand 8 ein Anschlußelement 12 für einen Drehantrieb des Zylinderrohres 6 vorgesehen. Im Ausführungsbeispiel nach den Figuren 2 und 3 ist das Anschlußelement 12 als Vierkantelement ausgebildet. Es liegt im Rahmen der Erfindung, daß die Verdrehung des Zylinderrohres 6 mit Hilfe eines Stellmotors 13 verwirklicht wird. Vorzugsweise wird der Stellmotor 13 an das Anschlußelement 12 angeschlossen.

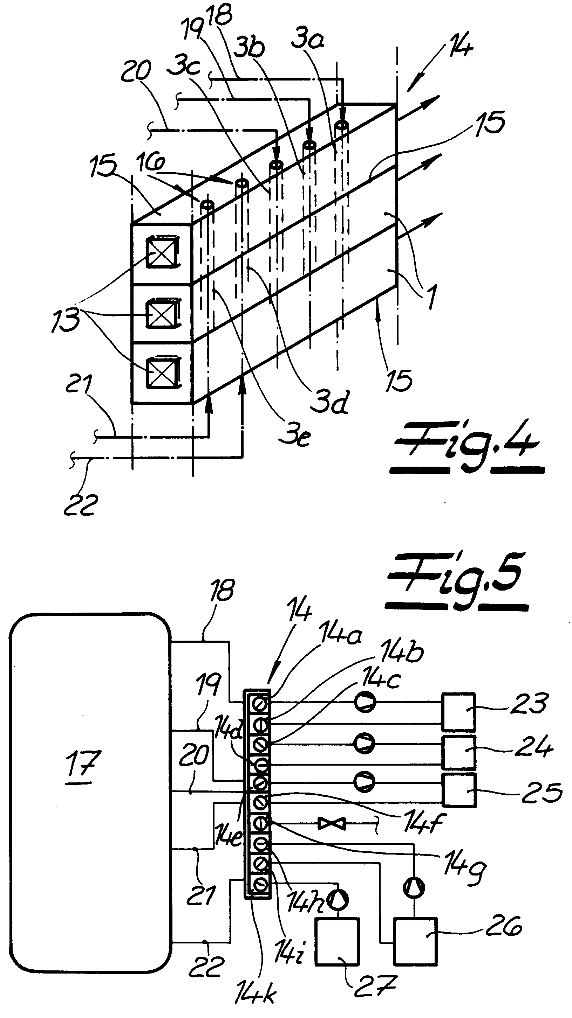

Nach bevorzugter Ausführungsform, der im Rahmen der Erfindung besondere Bedeutung zukommt, werden mehrere erfindungsgemäße Mehrwege-Mischventile als Ventilmodule zu einem Ventilaggregat 14 vereinigt. Vorzugsweise weist das Ventilgehäuse 1 eines Mehrwege-Mischventils mindestens eine Ventilgehäuseanschlußfläche 15 auf, an der Anschlußöffnungen 16 der Fluidkanäle 3 vorgesehen sind. Zweckmäßigerweise werden jeweils zwei erfindungsgemäße Mehrwege-Mischventile mit ihren Ventilgehäuseanschlußflächen 15 aneinander- bzw. aufeinandergesetzt, wobei bevorzugt die Anschlußöffnungen 16 des einen Ventilgehäuses 1 an die Anschlußöffnungen 16 des zweiten Ventilgehäuses 1 anschließen. Vorzugsweise weist ein Ventilgehäuse 1 zwei gegenüberliegende Ventilgehäuseanschlußflächen 15, jeweils mit Anschlußöffnungen 16, auf. Auf diese Weise wird erreicht, daß durch Zusammenfügen mehrerer Mehrwege-Mischventile zu einem Ventilaggregat 14 einzelne aneinander angeschlossene Fluidkanäle 3 jeweils zu einem, mehrere Ventilgehäuse 1 oder bevorzugt das gesamte Ventilaggregat, durchlaufenden Kanal kombiniert werden. Nach bevorzugter Ausführungsform und im Ausführungsbeispiel nach den Figuren ist das Ventilgehäuse 1 eines erfindungsgemäßen Mehrwege-Mischventils quaderförmig ausgebildet. Vorzugsweise und im Ausführungsbeispiel sind an zwei gegenüberliegenden Quaderseitenflächen die Ventilgehäuseanschlußflächen 15 mit Anschlußöffnungen 16 verwirklicht. In Figur 4 werden drei miteinander kombinierte Mehrwege-Mischventile eines Ventilaggregates 14 gezeigt. Hier durchlaufen fünf Fluidkanäle 3a, 3b, 3c, 3d und 3e das Ventilaggregat 14 vertikal. - In Figur 4 ist im übrigen jedem Mehrwege-Mischventil ein Stellmotor 13 zum Drehantrieb des jeweiligen Zylinderrohres 6 zugeordnet. Es liegt jedoch auch im Rahmen der Erfindung, zwei oder mehr Zylinderrohre 6 mit nur einem Stellmotor anzutreiben.

Das erfindungsgemäße Mehrwege-Mischventil und insbesondere ein Ventilaggregat 14 aus mehreren Mehrwege-Mischventilen eignet sich vor allem zum Einsatz in Heizanlagen und insbesondere zum Einsatz in Heizanlagen, die mit Schichtenspeichern 17 arbeiten. Durch die Ventil- und/oder Mischfunktionen des erfindungsgemäßen Mehrwege-Mischventils können auf einfache Weise Flüssigkeitsströme mit unterschiedlicher Temperatur manipuliert werden. Vor allem ist eine einfache und effektive Vermischung von Flüssigkeitsströmen unterschiedlicher Temperatur möglich, so daß die Temperatur des resultierenden Flüssigkeitsstromes sehr funktionssicher und exakt eingestellt werden kann. In Figur 5 ist schematisch eine Heizanlage mit Schichtenspeicher 17 dargestellt, die mit einem Ventilaggregat 14 aus zehn miteinander kombinierten erfindungsgemäßen Mehrwege-Mischventilen arbeitet. Das Ventilaggregat 14 weist fünf Fluidkanäle auf, die die zehn Mehrwege-Mischventile, wie in Figur 4 verdeutlicht, in vertikaler Richtung durchlaufen. Die einzelnen Fluidkanäle 3a, 3b, 3c, 3d und 3e sind über Flüssigkeitsleitungen 18, 19, 20, 21, und 22 jeweils mit einer Schicht des Schichtenspeichers 17 verbunden, wobei die fünf Schichten des Schichtenspeichers 17 unterschiedliche Temperaturen aufweisen. Dabei weist die oberste Schicht die höchste Temperatur und die unterste Schicht die niedrigste Temperatur auf. - Die Mehrwege-Mischventile 14a bis 14f des Ventilaggregates 14 sind an Wärmeverbraucher 23, 24 und 25 angeschlossen. Der Wärmeverbraucher 23 mag beispielsweise eine Gebäudeheizung mit Heizkörpern sein und bei dem Wärmeverbraucher 24 mag es sich um eine Fußbodenheizung handeln. Die Funktionsweise soll am Beispiel des Wärmeverbrauchers 23 erläutert werden. Das Mehrwege-Mischventil 14a regelt den Zulauf des Wärmeverbrauchers 23. Durch die Mischfunktion des Mehrwege-Mischventils 14a kann ein Flüssigkeitszulauf mit der gewünschten Temperatur exakt eingestellt werden, welcher Flüssigkeitszulauf das Mehrwege-Mischventil 14a durch seine Durchtrittsöffnung 7 verläßt und dem Wärmeverbraucher 23 zugeführt wird. Der Rücklauf des Wärmeverbrauchers 23 wird dagegen dem Mehrwege-Mischventil 14b zugeführt. Vorzugsweise arbeitet auch das Mehrwege-Mischventil 14b mit einer Mischfunktion und durch entsprechende Mischung von Flüssigkeitsströmen kann die Temperatur des Rücklaufes des Wärmespeichers 23 auf die Temperatur eines der Schichten des Schichtenspeichers 17 eingestellt werden und kann diese Mischung dann der entsprechenden Schicht zugeführt werden. Im übrigen kann der Rücklauf des Mehrwege-Mischventils 14b auch in das Mehrwege-Mischventil 14c überführt werden, das den Zulauf des Wärmeverbrauchers 24 regelt. Durch entsprechende Mischfunktionen des Mehrwege-Mischventils 14 c kann die Temperatur des Flüssigkeitszulaufes des Wärmeverbrauchers 24 eingestellt werden. Im übrigen ist ein Wärmeerzeuger 26 vorgesehen, der beispielsweise als Ölgebläsebrenner ausgeführt sein kann. Die Zuflußtemperatur dieses Wärmeerzeugers 26 kann mit Hilfe des Mehrwege-Mischventils 14i eingestellt werden. Die im Wärmeerzeuger 26 erwärmte Flüssigkeit wird dem Mehrwege-Mischventil 14h zugeführt. Mit Hilfe des Mehrwege-Mischventils 14h kann der Flüssigkeitsstrom beispielsweise einer Schicht des Schichtenspeichers 17 mit entsprechender Temperatur zugeführt werden. Fernerhin ist ein Wärmeerzeuger 27 vorgesehen, bei dem es sich beispielsweise um einen Gasbrennwertkessel handeln kann. Dieser Wärmeerzeuger 27 benötigt vorzugsweise tiefe Rücklauftemperaturen und kann somit an einer kalten Schicht im unteren Bereich des Schichtenspeichers 17 angeschlossen werden. Die im Wärmeerzeuger 27 erwärmte Flüssigkeit wird dem Mehrwege-Mischventil 14k zugeleitet. Von hier aus kann der Flüssigkeitsstrom einer Schicht des Schichtenspeichers 17 zugeleitet werden, welche Schicht der Temperatur des Flüssigkeitsstromes entspricht. Vorstehend sind verschiedene Mischfunktionen bzw. Ventilfunktionen von erfindungsgemäßen Mehrwege-Mischventilen in einem Ventilaggregat 14 nur beispielsweise beschrieben. Die Zylinderrohre 6 der Mehrwege-Mischventile 14a bis 14k des Ventilaggregates 14 werden vorzugsweise jeweils durch einen Stellmotor 13 angetrieben. Die Stellmotoren 13 sind vorzugsweise an eine nicht dargestellte Steuer- und/oder Regeleinrichtung, bevorzugt mit Mikrocomputer, angeschlossen. Es versteht sich, daß in den Leitungen der Heizungsanlage entsprechende Temperatursensoren vorgesehen sind und in Abhängigkeit von den gemessenen Temperaturen werden vorzugsweise die Mehrwege-Mischventile eingestellt bzw. wird die Drehung der Zylinderrohre 6 der Mehrwege-Mischventile 14a bis 14k gesteuert und/oder geregelt.

Insbesondere bei einer Heizanlage können mit Hilfe der erfindungsgemäßen Mehrwege-Mischventile optimal die erwünschten Temperaturen einzelner Flüssigkeitsströme eingestellt werden. Vor allem kann insbesondere durch die Mischfunktion der Mehrwege-Mischventile die Temperatur der den einzelnen Schichten des Schichtenspeichers 17 zugeführten Flüssigkeitsströme jeweils sehr exakt auf die Temperatur der jeweiligen Schicht abgestimmt werden. Fernerhin können mit Hilfe der erfindungsgemäßen Mehrwege-Mischventile funktionssicher Flüssigkeitsströme aus definierten Schichten des Schichtenspeichers 17 abgeführt werden. Außerdem ist es mit den Mehrwege-Mischventilen problemlos möglich, den Wärmeerzeugern und/oder Wärmeverbrauchern einer Heizungsanlage Flüssigkeitsströme mit exakt eingestellter Temperatur zuzuführen bzw. von diesen abzuführen. Im Ergebnis wird somit insgesamt ein höherer Wirkungsgrad im Vergleich zu bekannten Heizungsanlagen erreicht.

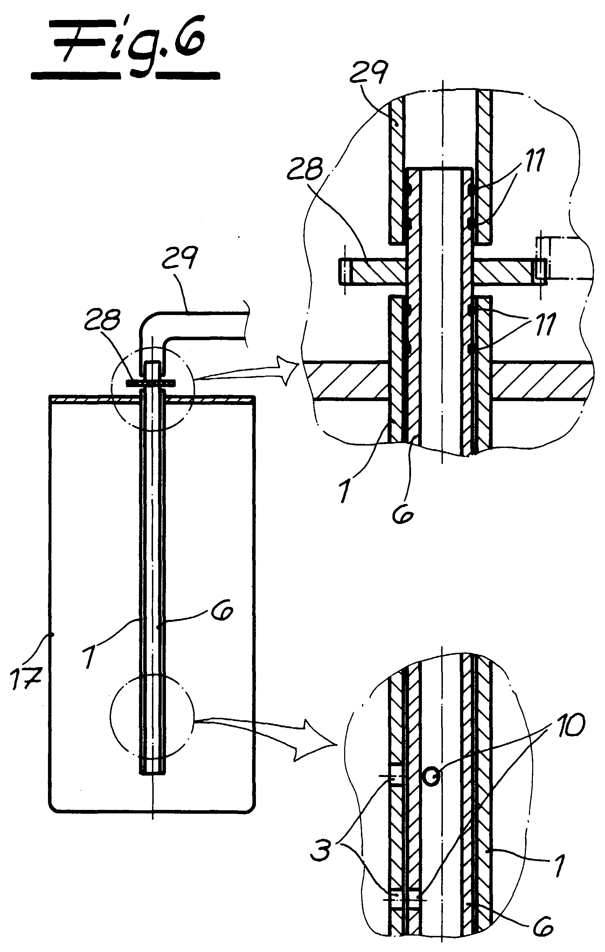

Die Figur 6 zeigt eine besondere Ausführungsform der Erfindung. Hier ist eine Ausführungsform des erfindungsgemäßen Mehrwege-Mischventils in einem Schichtenspeicher 17 angeordnet, wobei das Ventilgehäuse 1 und das Zylinderrohr 6 parallel zu den Seitenwänden des Schichtenspeichers 17 ausgerichtet sind. Bei dieser Ausführungsform ist zweckmäßigerweise und im Ausführungsbeispiel das Ventilgehäuse 1 ebenfalls als zylindrisches Rohr ausgeführt, in welchem zylindrischen Rohr das um seine Längsachse drehbare Zylinderrohr 6 angeordnet ist. Die Bohrungen in dem als zylindrisches Rohr ausgeführten Ventilgehäuse 1 bilden die Fluidkanäle 3. Im Ausführungsbeispiel nach Figur 6 ist das Zylinderrohr 6 oberhalb des Schichtenspeichers 17 mit einem Antriebsritzel 28 versehen, welches Antriebsritzel 28 zweckmäßigerweise über einen in der Figur 6 nicht dargestellten Stellmotor 13 angetrieben wird. Die Fluidkanäle 3 des Ventilgehäuses 1 sind im Ausführungsbeispiel bestimmten Schichten des Schichtenspeichers 17 zugeordnet. Die genannten Flüssigkeitsschichten des Schichtenspeichers 17 weisen unterschiedliche Temperaturen auf. Durch gezielte Verdrehung des Zylinderrohres 6 wird der Zugriff auf ausgewählte Schichten des Schichtenspeichers 17 erlaubt und kann somit Flüssigkeit einer vorgewählten Temperatur mit Hilfe des Mehrwege-Mischventils über die Fluidleitung 29 abgeführt werden. Die vorstehend erläuterte Ausführungsform hat sich besonders bewährt.

## Patentansprüche

1. Mehrwege-Mischventil für fluide Medien, insbesondere für Flüssigkeitsströme, mit Ventilgehäuse (1) und in dem Ventilgehäuse (1) bewegbarem Ventilkörper,
wobei das Ventilgehäuse (1) eine Zylinderbohrung (2) sowie eine Mehrzahl von Fluidkanälen (3) aufweist, wobei in Längsrichtung der Zylinderbohrung (2) an der Zylinderbohrungswandung (4) eine Mehrzahl von Verbindungsöffnungen (5) zu den Fluidkanälen (3) vorgesehen sind,
wobei in der Zylinderbohrung (2) ein um seine Längsachse drehbares Zylinderrohr (6) als Ventilkörper angeordnet ist, welches Zylinderrohr (6) an zumindest einer Stirnseite eine Durchtrittsöffnung (7) für das fluide Medium aufweist
und wobei in dem Zylinderrohrmantel (9) des Zylinderrohres (6) eine Mehrzahl von Ventilöffnungen (10) mit der Maßgabe angeordnet ist, daß durch Drehung des Zylinderrohres (6) jeweils zumindest eine Ventilöffnung (10) in Durchtrittsverbindung mit einer Verbindungsöffnung (5) überführbar ist.

2. Mehrwege-Mischventil nach Anspruch 1, wobei die Fluidkanäle (3) senkrecht zu der Zylinderbohrung (2) in dem Ventilgehäuse (1) angeordnet sind.

3. Mehrwege-Mischventil nach einem der Ansprüche 1 oder 2, wobei die Zylinderbohrung (2), die Verbindungsoffnungen (5) bildend, in die Fluidkanäle (3) eingreift.

4. Mehrwege-Mischventil nach einem der Ansprüche 1 bis 3, wobei die Abstände der Verbindungsöffnungen (5) in Längsrichtung der Zylinderbohrung (2) den Abständen der Ventilöffnungen (10) bezüglich der Längsrichtung des Zylinderrohres (6) entsprechen.

5. Mehrwege-Mischventil nach einem der Ansprüche 1 bis 4, wobei in zumindest einer Drehstellung des Zylinderrohres (6) zumindest zwei Ventilöffnungen in Durchtrittsverbindung mit zumindest zwei Verbindungsöffnungen (5) stehen.

6. Mehrwege-Mischventil nach einem der Ansprüche 1 bis 5, wobei das Zylinderrohr (6) an einer Stirnseite mit einer Zylinderstirnwand (8) verschlossen ist.

7. Mehrwege-Mischventil nach Anspruch 5, wobei rohraußenseitig an der Zylinderstirnwand (8) zumindest ein Anschlußelement (12) für einen Drehantrieb des Zylinderrohres (6) vorgesehen ist.

8. Mehrwege-Mischventil nach einem der Ansprüche 1 bis 7, wobei zwischen Zylinderrohr (6) und Zylinderbohrungswandung (4) zumindest ein Dichtungselement angeordnet ist.

9. Mehrwege-Mischventil nach einem der Ansprüche 1 bis 8, wobei das Ventilgehäuse (1) quaderförmig ausgebildet ist, wobei zumindest eine Quaderseitenfläche als Ventilgehäuseanschlußfläche (15) ausgeführt ist und wobei die Ventilgehäuseanschlußfläche (15) zumindest zwei Anschlußöffnungen (16) der Fluidkanäle (3) aufweist.
